# EUROPÄISCHE PATENTANMELDUNG

(11) **EP 4 345 362 A1**
(43) Veröffentlichungstag der Anmeldung: **03.04.2024**
(21) Anmeldenummer: 22198108.7
(22) Anmeldetag: 27.09.2022
(51) Int. Cl.: F17C 5/00, F17C 5/06

(54) **VERTEILER EINES FLUIDVERSORGUNGSSYSTEMS**

(71) Anmelder: Eugen Seitz AG, 8623 Wetzikon (CH)
(72) Erfinder: MÜLLER, Alexander, 8603 Schwerzenbach (CH); SCHMID, Beat, 8604 Zimikon (CH); BRONNER, Michael, 8362 Balterswil (CH)
(74) Vertreter: Clerc, Natalia

(57) **Zusammenfassung**

Ein Verteiler (V) eines Fluidversorgungssystems, insbesondere einer Wasserstoff-Tankstelle, weist Leitungen (10-16) zur Verbindung von Speicherbehältern (B1-B8) mit Stationen (CP, Z1-Z4) und Ventileinheiten (6, 7) auf, um wahlweise die Verbindung zwischen den Speicherbehältern (B1-B8) und den Stationen (CP, Z1-Z4) zu öffnen und zu schliessen. Die Leitungen (10-16) sind in einem Leitungsmodul (1) matrixförmig angeordnet. Die Ventileinheiten (6,7) sind matrixförmig auf dem Leitungsmodul (1) lösbar befestigt. Der Verteiler ermöglicht eine kompakte und platzsparende Anordnung von Ventileinheiten, die zudem auf einfache Art und Weise ausgewechselt werden können. Vorzugsweise umfasst jede Ventileinheit ein Hauptventil, ein Vorsteuerventil und ein Rückschlagventil.

## Beschreibung

### TECHNISCHES GEBIET

Die vorliegende Erfindung betrifft einen Verteiler eines Fluidversorgungssystems, insbesondere einer Wasserstoff-Tankstelle, sowie eine Ventileinheit, insbesondere zur Verwendung in einem Verteiler eines Fluidversorgungssystems.

### STAND DER TECHNIK

Fluidversorgungssysteme, insbesondere eine Wasserstoffbetankungsanlage und im Speziellen eine Wasserstofftankstelle, verfügen über einen oder mehrere HochdruckSpeicherbehälter, in denen flüssiger oder komprimiert gasförmiger Wasserstoff zum Füllen von Behältern oder zum Betanken von Kraftfahrzeugen oder von Eisenbahnen bereitgestellt ist. Die Hochdruckspeicherbehälter werden in diesem Text auch Speicherbehälter, Drucktanks, Banken oder Speicherbanken genannt.

Um ein Fahrzeug möglichst schnell vollständig zu betanken, wird der Wasserstoff nacheinander aus mehreren Speicherbehältern bezogen. Je weiter die Befüllung des Fahrzeugs fortgeschritten ist, umso höher muss der Druck in den Speicherbehältern sein. Die Drücke in den einzelnen Speicherbehältern sind deshalb unterschiedlich hoch, üblicherweise sind sie 350 bar, 500 bar, 700 bar und 1000 bar. Speicherbehälter mit anderen Druckniveaus sind jedoch auch möglich. Werden vorgesteuerte Ventile zum Öffnen und Schliessen der Leitungen verwendet, lassen sich Totzeiten beim Umschalten auf andere Speicherbehälter minimieren. Da die vorgesteuerten Ventile jedoch oft schneller öffnen als schliessen, sind ferner Rückschlagventile notwendig, um einen Rückfluss in den nicht mehr verwendeten Speicherbehälter mit tieferem Druck zu verhindern.

Fluidversorgungssysteme umfassen üblicherweise mehr als eine Verbraucherstation, an der befüllt wird. So weist eine Tankstelle üblicherweise mehr als eine Zapfsäule auf. Die Zuteilung der Fluidströme von den Speicherbehältern zu den Verbraucherstationen benötigt deshalb eine Vielzahl an Rohrleitungen, vorgesteuerten Ventilen und Rückschlagventilen.

Die diversen Rohrleitungen, Ventile und Rückschlagventile sind in sogenannten "Flow-Panels" oder "Valve-Panels" angeordnet. Diese Anordnungen weisen viele Verbindungsstellen auf, die abgedichtet sein müssen. Die Vielzahl der Verbindungsstellen erhöht das Risiko einer Leckage. Ist eine Leckage vorhanden, so ist sie oft schwer zugänglich und somit schwer zu beheben.

Auch das Auswechseln der einem Verschleiss unterworfenen Ventile und Rückschlagventile braucht Zeit, da diese oft schwer zugänglich sind und die anschliessende erneute Abdichtung der Verbindungsstellen aufwändig ist. Dies verursacht lange Stillstandzeiten der Anlage, d.h. des Fluidversorgungssystems, und hohe Wartungskosten.

Auch die Erstmontage der "Flow-Panels" ist zeitaufwändig und benötigt Fachkenntnis. Dies deshalb, weil sie wegen ihrer Grösse und des Gewichts üblicherweise vor Ort zusammengesetzt werden. Die Erstbetriebskontrolle kann deshalb ebenfalls erst vor Ort durchgeführt werden. Übliche Montagezeiten liegen durchaus bei 5 bis 7 Tagen.

Ein weiterer Nachteil der bekannten "Flow-Panels" ist, dass sie relativ gross und schwer sind. Sie benötigen oft einen eigenen Schrank und somit zusätzlichen Platz. Sie lassen sich kaum mit anderen Baugruppen in einen gemeinsamen Container einbauen. Grundflächen sind jedoch teuer, insbesondere bei Tankstellen, so dass die "Flow-Panels" die Mietkosten oder den Kaufpreis für den Standort der Anlage erhöhen.

Ein "Flow-Panel" für acht Speicherbehälter und vier Zapfsäulen weist typischerweise circa eine Abmessung von ca. 2 x 2 x 1 m und wiegt mehr als 600 kg. Er weist ferner circa 288 Konus-und Gewinde-Verbindungen auf, die alle dicht sein müssen (CT Verbindung = cone and thread).

US 8 707 977 B2 offenbart einen Verteiler für ein Fluidversorgungssystem, in welchem kaskadiert aus mehreren Hochdruckbehältern ein kleinerer Behälter befüllt wird. Der Verteiler umfasst einen massiven Körper mit Aufnahmebohrungen für Rückschlagventile und Aufnahmebohrungen für Druckfolgeventile. Je ein Rückschlagventil und ein Druckfolgeventil sind über eine externe Leitung zu einer Einheit verbunden. Sie lassen sich als gemeinsame Kartusche in die Bohrungen des Verteilerkörpers einführen. Eine Sensorleitung führt vom zu befüllenden kleineren Behälter zu den Druckfolgeventilen, die je nach Druck im kleineren Behälter öffnen oder schliessen. Eine separate Bohrung ermöglich das erneute Befüllen der Hochdruckbehälter. Dieser Verteiler eignet sich für das Befüllen eines einzelnen Behälters, jedoch nicht für eine Anlage mit gesteuerten Ventilen zur Versorgung von mehreren Verbraucherstationen, beispielsweise, weil keine Steuerung der einzelnen Ventile möglich ist.

### DARSTELLUNG DER ERFINDUNG

Es ist eine Aufgabe der Erfindung, einen Verteiler für ein Fluidversorgungssystem, insbesondere einer Wasserstoff-Tankstelle zu schaffen, das die oben genannten Probleme der bekannten Flow-Panels behebt.

Diese Aufgabe löst ein Verteiler mit den Merkmalen des Anspruchs 1.

Der erfindungsgemässe Verteiler weist Leitungen zur Verbindung von Speicherbehältern mit Stationen und Ventileinheiten auf, um wahlweise die Verbindung zwischen den Speicherbehältern und den Stationen zu öffnen und zu schliessen. Die Leitungen sind in einem Leitungsmodul matrixförmig angeordnet und die Ventileinheiten sind matrixförmig auf dem Leitungsmodul lösbar befestigt.

Die Verwendung eines Leitungsmoduls, an welchem die Ventile angebracht sind, erleichtert die Erstmontage. Die Montagezeit ist massiv verkürzt. Je nach Ausführungsform beträgt sie beträchtlich weniger als 1 Tag.

Die erfindungsgemässe Anordnung der Leitungen und Ventileinheiten ermöglicht einen einfachen Zugang zu allen Ventileinheiten. Sie lassen sich somit auf einfache Art und Weise auswechseln, ohne dass Leitungen entfernt bzw. weitere Dichtungen gelöst werden müssen. Wartungszeiten und -kosten sowie Stillstandzeiten der Tankstelle sind somit minimiert.

Vorzugsweise sind alle Ventileinheiten auf derselben Seite des Leitungsmoduls angeordnet. Somit sind alle Ventileinheiten von derselben Seite aus zugänglich. Ist der Verteiler in einem Schrank angeordnet, so kann diese Seite die Vorderseite und somit die zugänglichste Seite bilden. Auch dies erleichtert und verkürzt die Wartung.

Ferner ermöglicht die matrixförmige Anordnung eine Skalierung des Verteilers. D.h. dieselbe Anordnung kann für die Verwendung von unterschiedlichen Mengen an Speicherbehältern und Stationen verwendet werden. Dies vereinfacht die Planung und Konstruktion derartiger Verteiler.

Die Stationen sind mindestens eine, vorzugsweise mehrere Verbraucherstationen und/oder mindestens eine Kryopumpenstation. Die Verbraucherstationen sind vorzugsweise Zapfsäulen oder andere Abfüllvorrichtungen. Die Kryopumpenstation dient der Befüllung der Speicherbehälter. Je nach Ausführungsform sind nur Verbraucherstationen vorhanden. In anderen Ausführungsformen ist mindestens eine Verbraucherstation, vorzugsweise sind mehrere Verbraucherstationen, und eine einzige Kryopumpenstation vorhanden.

Der Verteiler lässt sich dank der matrixförmigen Anordnung auch kompakter und somit leichter ausgestalten.

Vorzugsweise besteht das Leitungsmodul aus mindestens einem massiven Bauteil, wobei die Leitungen Bohrungen im mindestens einen massiven Bauteil sind. Das Bauteil ist vorzugsweise aus einem Metall, insbesondere aus Stahl gefertigt. Dadurch weist der Verteiler selber keine Rohrleitungen auf. Die Verbindungsstellen und somit die möglichen Leckagestellen lassen sich massiv reduzieren.

Die Leitungen in Form von Bohrungen in einem massiven Bauteil sind äusserst platzsparend. Das Leitungsmodul kann relativ klein ausgebildet werden und ist entsprechend leicht.

Ein Verteiler in einer Ausführung mit massivem Bauteil und Bohrungen, das für acht Hochdruck-Speicherbehälter und vier Zapfsäulen ausgelegt ist, wiegt inklusive der Ventile circa 200 kg und benötigt circa 0.5 x 0.5 x 0.2 m an Stellfläche. Ferner benötigt es nur noch dreizehn Verbindungsstellen, wenn die Rückbefüllung über eine Kryopumpe ebenfalls im Verteiler ermöglicht ist.

In einer Ausführungsform besteht das Leitungsmodul aus einem einzigen massiven Bauteil. Die Bohrungen lassen sich relativ nahe beieinander anordnen. Das Leitungsmodul ist optimal dicht gestaltet. Das Leitungsmodul und somit der Verteiler sind äusserst kompakt.

In einer anderen Ausführungsform weist das Leitungsmodul mehrere quaderförmige, längliche Bauteile auf, wobei jedes Bauteil die Verbindung zu einem Speicherbehälter oder einer Station erstellt und wobei mehrere derartige Bauteile aneinanderfügbar sind, um gemeinsame Leitungen auszubilden. Diese bausteinförmige Variante ermöglicht eine einfache Erweiterung oder Reduzierung einer bestehenden Anlage auf mehr oder weniger Speicherbehälter und/oder Zapfsäulen. Ferner lassen sich Produktionskosten bei der Herstellung des Leitungsmoduls optimieren, da die produzierten Bauteile je nach Kundenbedürfnis zusammengestellt werden können.

In einer bevorzugten Ausführungsform weist jede Ventileinheit ein Hauptventil, ein Vorsteuerventil zur Steuerung des Hauptventils und ein Rückschlagventil auf, die ein gemeinsames Modul bilden. Dieses Modul ist als Einheit am Leitungsmodul befestigbar und vom Leitungsmodul lösbar.

Vorzugsweise ist die Ventileinheit derart ausgebildet, dass ein Durchflussweg des Fluids durch die Ventileinheit von einem Einlass zu einem Auslass der Ventileinheit u-förmig ist. Dadurch sind Einlass und Auslass an derselben Seite angeordnet und die Ventileinheit selber ist kompakt ausgebildet.

Der Kolben des Hauptventils bewegt sich vorzugsweise in einer annähernd senkrechten Richtung zur Bewegungsrichtung des Kolbens des Rückschlagventils. Das Pilotventil zur Vorsteuerung des Hauptventils befindet sich vorzugsweise in der Verlängerung des Rückschlagventils. Die Bewegungsrichtung des Kolbens des Vorsteuerventils verläuft vorzugsweise parallel zur Bewegungsrichtung des Kolbens des Rückschlagventils und senkrecht zum Kolben des Hauptventils. Die drei Kolben öffnen sich vorzugsweise in eine gemeinsame Ventilkammer, die Teil des Fluidwegs durch die Ventileinheit ist. Vorzugsweise öffnet sich der Ausgang des Hauptventils, der Ausgang des Vorsteuerventils und der Eingang des Rückschlagventils in die gemeinsame Ventilkammer.

Vorzugsweise sind mindestens das Hauptventil und das Rückschlagventil in einem gemeinsamen Gehäuse angeordnet. Vorzugsweise ist das Pilotventil ebenfalls in diesem Gehäuse integriert oder an ihm angeschraubt. Dies führt zu einer sehr kompakten Ausbildung der Ventileinheit. Die mehreren Ventileinheiten lassen sich somit äusserst platzsparend am Leitungsmodul anordnen.

In bevorzugten Ausführungsformen sind ein Teil der Leitungen des Leitungsmoduls Speicherbehälter-Leitungen, wobei jede Speicherbehälter-Leitung jeweils einen Speicherbehälter mit einer ersten Teilmenge der Ventileinheiten verbindet. Ein anderer Teil der Leitungen des Leitungsmoduls sind in dieser Ausführungsform Station-Leitungen, wobei jede Station-Leitung eine zweite Teilmenge der Ventileinheiten mit jeweils einer Verbraucherstation verbindet. Diese Anordnung ermöglicht eine bevorzugte Ausführungsform, bei der die erste Teilmenge und die zweite Teilmenge nicht identisch sind, wobei jedoch genau eine Ventileinheit des Verteilers in der ersten und der zweiten Teilmenge vorhanden ist.

In bevorzugten Ausführungsformen erstrecken sich die Speicherbehälter-Leitungen in einer ersten Richtung einer Matrix und die Station-Leitungen erstrecken sich in einer zur ersten Richtung senkrecht verlaufenden zweiten Richtung der Matrix, wobei die Speicherbehälter-Leitungen beabstandet zu den Station-Leitungen verlaufen.

Diese Anordnungen ermöglichen, dass die Ventileinheiten jeweils einer eindeutigen Kombination einer Speichereinheit und einer Station zugeordnet sind.

In bevorzugten Ausführungsformen sind erste Ventil-Leitungen vorhanden, die sich, in einem Winkel zu den Speicherbehälter-Leitungen, von den Speicherbehälter-Leitungen zu den Ventileinheiten erstrecken, und wobei zweite Ventil-Leitungen vorhanden sind, die sich, in einem Winkel zu den Station-Leitungen, von den Station-Leitungen zu den Ventileinheiten erstrecken. Auf diese Weise lassen sich die Ventileinheiten auf dem Leitungsmodul anordnen. Es sind keine Ausnehmungen notwendig, um die Ventileinheiten in den Block des Leitungsmoduls einzuführen. Das Leitungsmodul kann relativ schmal und somit leicht ausgebildet werden.

Vorzugsweise ist pro Speicherbehälter genau eine Speicherbehälter-Leitung und pro Station genau eine Station-Leitung vorhanden, wobei die Speicherbehälter-Leitung und die Station-Leitung im Leitungsmodul ohne Unterbrechung und geradlinig verlaufen. Dies verringert wiederum die Grösse des Leitungsmoduls und minimiert abzudichtende Verbindungsstellen.

Die Station ist vorzugsweise eine Verbraucherstation, insbesondere eine Zapfsäule. Sie kann jedoch auch eine Kryopumpenstation sein, die der Befüllung der Speicherbehälter dient. In einer Ausführungsform ist mindestens eine Station eine Verbraucherstation und mindestens eine weitere Station ist eine Kryopumpenstation. Die der mindestens einen Verbraucherstation zugeordneten Ventileinheiten unterscheiden sich dabei mindestens in ihrer Anordnung von den der Kryopumpenstation zugeordneten Ventileinheiten.

Die der Kryopumpenstation zugeordneten Ventileinheiten sind je nach Ausführungsform gleich ausgebildet wie die bereits erwähnten Ventileinheiten, wobei sie umgekehrt angeordnet sind. In anderen Ausführungsformen werden jedoch andere Typen von Ventileinheiten verwendet.

Die erfindungsgemässe Ventileinheit weist ein Hauptventil, ein Vorsteuerventil zur Steuerung des Hauptventils und ein Rückschlagventil auf, die ein gemeinsames Modul bilden, das als Einheit montierbar und entfernbar ist. Das Hauptventil, das Pilotventil und das Rückschlagventil sind derart zueinander angeordnet, dass von einem Einlass in die Ventileinheit zu einem Auslass aus der Ventileinheit ein u-förmiger Durchflussweg für einen Durchfluss eines Fluids ausgebildet ist. Die Ventileinheit ist äusserst kompakt und platzsparend ausgebildet. Dank des u-förmig verlaufenden Durchflusswegs lässt sie sich vielfältig einsetzen, da sich Einlass und Auslass auf derselben Seite befinden. Die Ventileinheit lässt sich insbesondere, jedoch nicht ausschliesslich, in einem in diesem Text beschriebenen erfindungsgemässen Verteiler verwenden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine schematische Darstellung einer Wasserstoff-Tankstelle mit einem erfindungsgemässen Verteiler;
- Figur 2: eine perspektivische Darstellung des erfindungsgemässen Verteilers mit Leitungsmodul und Ventileinheiten in einer ersten Ausführungsform;
- Figur 3: einen Teil des Verteilers gemäss Figur 2;
- Figur 4: das Leitungsmodul des Verteilers gemäss Figur 2 mit einer montierten erfindungsgemässen Ventileinheit;
- Figur 5: eine perspektivische Ansicht des Leitungsmoduls gemäss Figur 4 von unten ohne Ventileinheiten;
- Figur 6: eine perspektivische Ansicht des Leitungsmoduls gemäss Figur 5 von vorne;
- Figur 7: die perspektivische Ansicht des Leitungsmoduls gemäss Figur 6 mit durchsichtiger Darstellung eines oberen Bereichs des Verteilers;
- Figur 8: die perspektivische Ansicht des Leitungsmoduls gemäss Figur 6 mit durchsichtiger Darstellung des Verteilers und mit Darstellung lediglich eines Teils der Bohrungen;
- Figur 9: die Explosionsdarstellung des Leitungsmoduls gemäss Figur 6 mit einer montierten erfindungsgemässen Ventileinheit;
- Figur 10: eine perspektivische Ansicht der erfindungsgemässen Ventileinheit;
- Figur 11: eine schematische Darstellung der Anordnung der drei Ventile der Ventileinheit;
- Figur 12: einen Längsschnitt durch die Ventileinheit gemäss Figur 10;
- Figur 13: eine perspektivische Darstellung des erfindungsgemässen Leitungsmoduls in einer zweiten Ausführungsform und
- Figur 14: eine weitere perspektivische Darstellung des Leitungsmoduls gemäss Figur 13 mit einigen montierten Ventileinheiten.

### BESCHREIBUNG BEVORZUGTER AUSFÜHRUNGSFORMEN

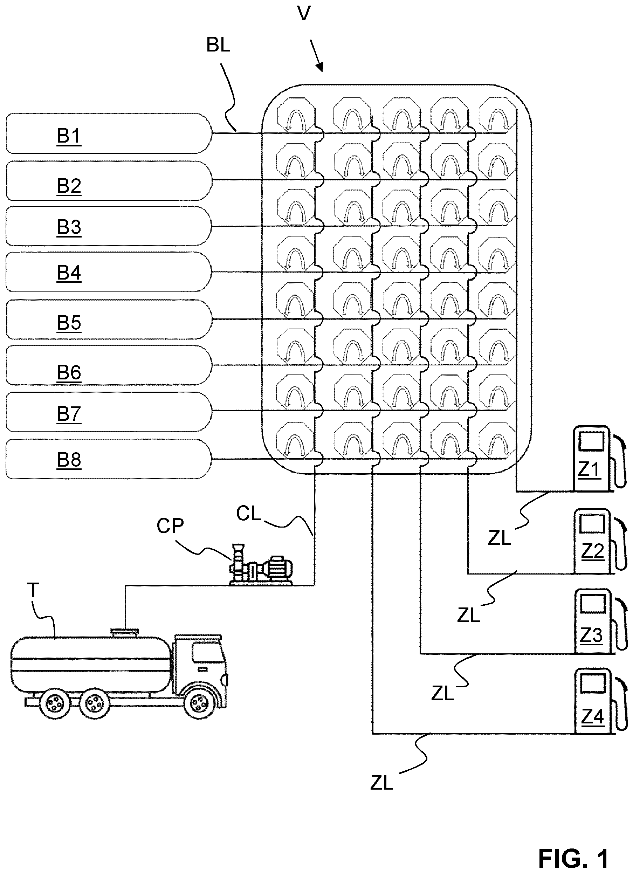

In Figur 1 ist schematisch eine Tankstelle dargestellt. Sie weist mehrere, hier acht, Speicherbehälter B1-B8 auf, in denen ein Fluid unter Hochdruck gelagert ist. In diesem Beispiel ist das Fluid Wasserstoff. Die Hochdruck-Speicherbehälter B1-B8 weisen unterschiedliche Drücke auf, wobei zwei oder mehrere Speicherbanken B1-B8 gleich grosse Drücke aufweisen können. Die Drücke sind vorzugsweise 350 bar, 500 bar, 700 bar und 1000 bar.

Erste Leitungen BL führen von jedem Speicherbehälter B1-B8 zu einem Verteiler V, auch Manifold genannt. Eine Kryopumpenstation CP mit einer Kryopumpe ist über eine zweite Leitung CL mit dem Verteiler V verbunden.

Mehrere, hier vier, Zapfsäulen Z1-Z4 sind über dritte Leitungen ZL mit dem Verteiler V verbunden.

Die Kryopumpenstation CP und die Zapfsäulen Z1-Z4 sind in diesem Text gemeinsam auch Stationen genannt.

Zum Befüllen der Speicherbehälter B1-B8 wird üblicherweise der Wasserstoff von einem Tanklastwagen T durch die Kryopumpenstation CP, die zweite Leitung CL, den Verteiler V und die ersten Leitungen BL in die einzelnen Speicherbehälter B1-B8 geleitet.

Zum Betanken von hier nicht dargestellten Fahrzeugen wird der Wasserstoff von den Speicherbehältern B1-B8 über die ersten Leitungen BL, den Verteiler V und die dritten Leitungen ZL zu den einzelnen Zapfsäulen Z1-Z4 geleitet. Dabei wird während des Betankens je nach Füllstand des Fahrzeugtanks von einem Speicherbehälter B1-B8 mit niedrigem Druck auf einen Speicherbehälter B1-B8 mit höherem Druck gewechselt. Der Wechsel erfolgt mittels des Verteilers V, der vorgesteuerte Ventile aufweist, die nach Massgabe einer elektronischen Steuerung gesteuert werden. Die Steuerung ist hier nicht dargestellt. Derartige Steuerungen von Ventilen zur Befüllung von Fahrzeugtanks an Tankstellen sind bekannt.

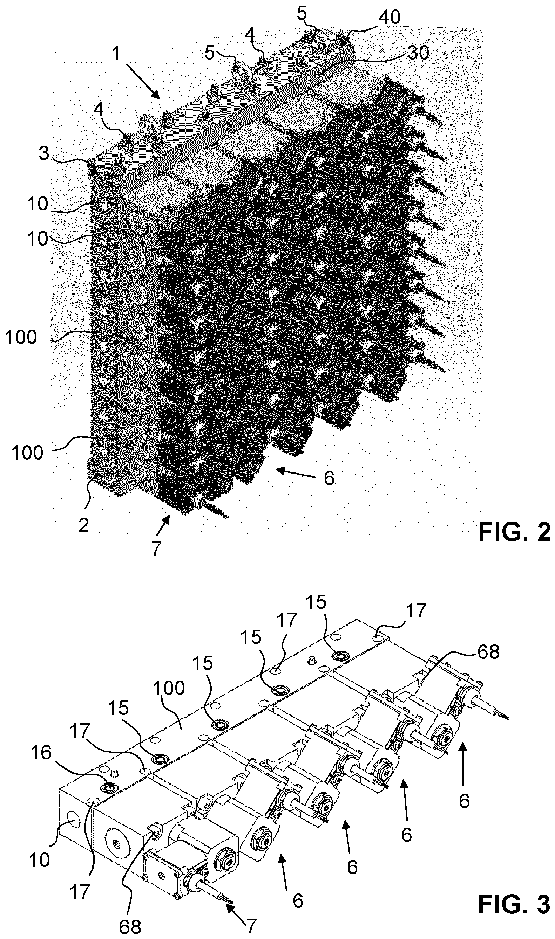

In den Figuren 2 bis 12 ist ein erstes Ausführungsbeispiel des erfindungsgemässen Verteilers dargestellt.

Er weist mehrere Leitungsmodul-Elemente 100 auf, die zu einem gemeinsamen Leitungsmodul 1 zusammengesetzt sind. Die Leitungsmodul-Elemente 100 sind quaderförmige, längliche und massive Bauteile mit mehreren Bohrungen. Vorzugsweise sind sie aus Metall, noch bevorzugter aus Stahl, gefertigt. Die Bohrungen sind durch Bohren, Bohrerodieren, Laserbohren oder auf eine andere Art und Weise entstanden.

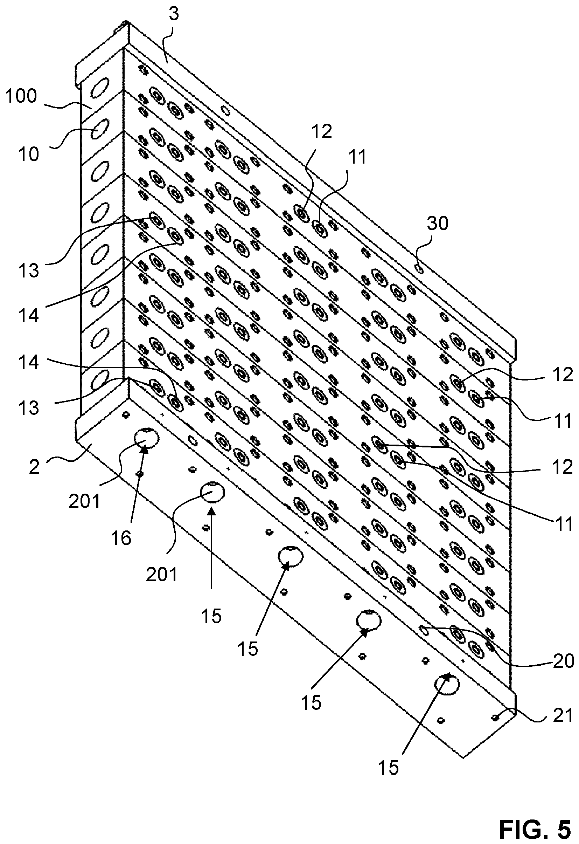

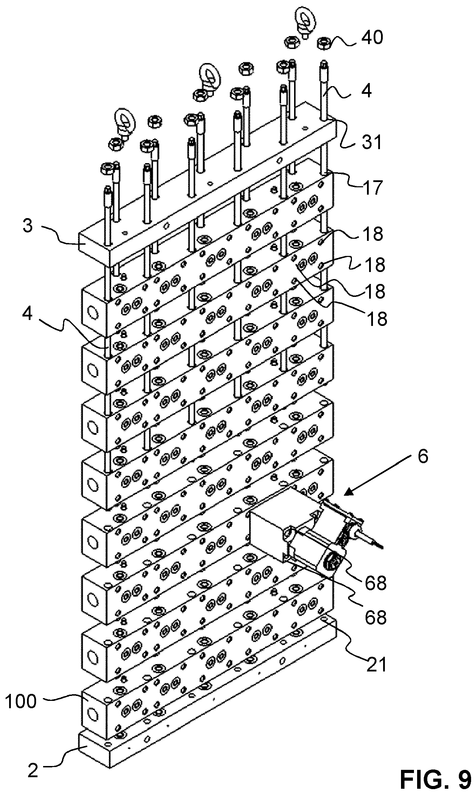

Mehrere Leitungsmodul-Elemente 100 sind übereinandergestapelt. Ein erstes, hier unteres, Ende ist von einem ersten Endbalken 2 gebildet. Ein zweites, hier oberes, Ende ist durch einen zweiten Endbalken 3 gebildet. Die Leitungsmodul-Elemente 100 sind gemeinsam mit dem ersten und dem zweiten Endbalken 2, 3 verschraubt. Die langen Verbindungsschrauben 4 und ihre Muttern 40 sind in den Figuren 2 und 9 gut erkennbar. Die Leitungsmodul-Elemente 100 weisen entsprechende Durchgangsbohrungen 17 auf, wie in den Figuren 3 und 9 gut erkennbar ist. Auch der zweite Endbalken 3 weist hierfür Durchgangsbohrungen 31 auf, die in Figur 9 beschriftet sind. Im ersten Endbalken 2 sind entsprechende Gewindeöffnungen 21 vorhanden. Dies ist in Figur 5 erkennbar.

In diesem Beispiel sind acht Leitungsmodul-Elemente 100 übereinandergestapelt. Je ein Leitungsmodul-Element 100 für eine der acht Speicherbehälter B1-B8 dieses Beispiels. Sind mehr oder weniger Speicherbehälter B1-B8 vorhanden, so ist die Anzahl der Leitungsmodul-Element 100 entsprechend gewählt. Dank der modularen Zusammensetzung lassen sich somit gleiche Bauteile für unterschiedliche Anwendungen einsetzen.

An jedem Leitungsmodul-Element 100 sind mehrere Ventileinheiten 6, 7 angeordnet. In diesem Beispiel sind es fünf Ventileinheiten. Vier davon dienen der Verbindung zwischen einem der acht Speicherbehälter B1-B8 und den vier Zapfsäulen Z1-Z4. D.h. jede der Ventileinheiten dieser Leiste ist demselben Speicherbehälter B1-B8, jedoch einer anderen Zapfsäule Z1-Z4 zugeordnet. Sie werden in diesem Text erste Ventileinheiten 6 oder Zapfsäulenventile genannt. Die fünfte Ventileinheit, hier zweite Ventileinheit 7 oder Kryopumpenventil genannt, dient der Befüllung der Speicherbehälter B1-B8 über die Kryopumpenstation CP. Soll der Verteiler V für mehr als vier Zapfsäulen eingesetzt werden, wird das Leitungsmodul-Element 100 entsprechend mit mehr Bohrungen und mit grösserer Länge hergestellt. Bei weniger als vier Zapfsäulen lassen sich einzelne Bohrungen dicht verschliessen. Alternativ lässt sich das Leitungsmodul-Element 100 entsprechend kürzer ausbilden.

Wie in den Figuren 2 und 3 gut erkennbar ist, sind alle ersten Ventileinheiten 6 gleich ausgerichtet. Die zweiten Ventileinheiten 7 sind anders als die ersten Ventileinheiten 6 ausgerichtet, jedoch ebenfalls alle gleich. Dies bildet, wie in Figur 2 erkennbar ist, eine sehr dichte und platzsparende Packung auf dem Leitungsmodul 1. Trotzdem sind die einzelnen ersten und zweiten Ventileinheiten 6, 7 gut zugänglich und können einzeln ausgewechselt werden. Dies erleichtert die Wartung.

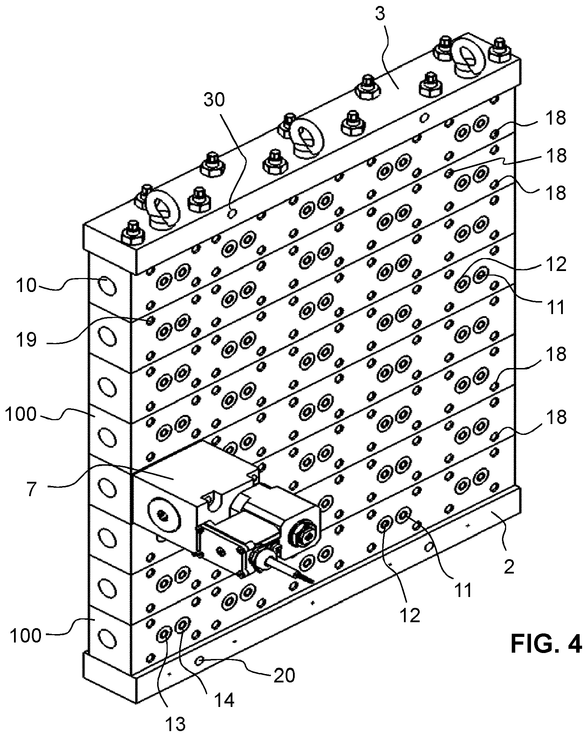

Die einzelnen Ventileinheiten 6, 7 sind mittels Schrauben 68 am Leitungsmodul-Element 100 angeschraubt. Die Schrauben 68 sind in Figur 3 gut erkennbar. Es sind üblicherweise vier. Die entsprechenden Gewindelöcher 18 im Leitungsmodul-Element 100 sind in den Figuren 4 und 9 erkennbar.

Der so zusammengesetzte Verteiler V lässt sich einfach transportieren. Hierzu sind auf dem zweiten Balken 3 Ösen 5 befestigt, wie in den Figuren 2 und 9 erkennbar ist. Dies erleichtert die Montage und die Wartung. Vorteilhaft ist ferner, dass der Verteiler werkseitig vollständig zusammengesetzt und getestet werden kann. Befestigungslöcher 20, 30, siehe Figur 4, erlauben die Befestigung des Verteilers V an einer Vorrichtung oder an einem Profil.

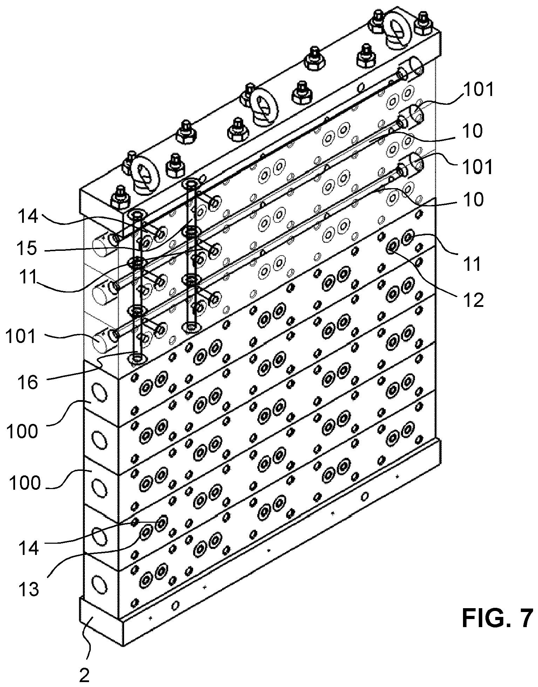

Jedes Leitungsmodul-Element 100 ist gleich aufgebaut. Es weist eine Bohrung in Längsrichtung des Leitungsmodul-Elements 100 auf, die eine Speicherbehälter-Leitung 10 bildet. Dies ist in den Figuren 3 und 7 gut erkennbar. In Figur 7 sind lediglich einige der Leitungen sichtbar. Die übrigen Leitungsmodul-Elemente 100 sind jedoch gleich ausgebildet.

Die Bohrung kann eine Durchgangsbohrung sein oder eine Sackbohrung. Ist sie eine Durchgangsbohrung, so ist ein Ende dicht verschlossen. Ein oder beide Enden der Speicherbehälter-Leitung 10 weisen eine Erweiterung 101 auf, um eine dichte Verbindung mit einer der ersten Leitungen BL zu ermöglichen. Diese Verbindung ist üblicherweise eine CT-Verbindung.

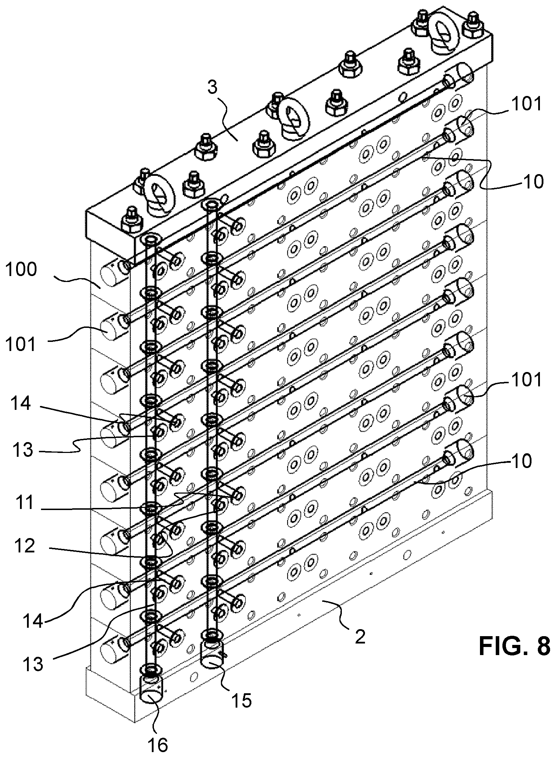

Ferner weist jedes Leitungsmodul-Element 100 senkrecht und beabstandet zur Speicherbehälter-Leitung 10 sowie senkrecht zu den Gewindelöchern 18 verlaufende Querbohrungen auf. Diese Querbohrungen verlaufen parallel zu den Durchgangsbohrungen 17. Sie bilden Teile von Leitungen zu den Stationen, d.h. zu den Zapfsäulen Z1-Z4 und der Kryopumpenstation CP. In diesem Beispiel sind vier Leitungen für die vier Zapfsäulen Z1-Z4, hier Zapfsäulen-Leitungen 15 genannt, und eine Leitung für die Kryopumpenstation CP, hier Kryopumpen-Leitung 16 genannt, vorhanden. Sie sind in den Figuren 3, 7 und 8 gut erkennbar. Es sind in den Figuren 7 und 8 nur ein Teil der Leitungen 15, 16 dargestellt. Sie erstrecken sich jedoch über alle Leitungsmodul-Elemente 100. Ferner ist jeweils lediglich eine Leitung 15 dargestellt. Parallel dazu erstrecken sich jedoch drei weitere derartige Leitungen 15, wie in den Figuren 3 und 5 anhand der Bohrungen erkennbar ist. Die Leitungen 15 und 16 verlaufen getrennt von den Speicherbehälter-Leitungen 10. Sie durchdringen sich nicht. Auch verlaufen die Speicherbehälter-Leitungen 10 getrennt und beabstandet voneinander. Gleiches gilt für die Leitungen 15 und 16.

In Figur 5 ist zudem erkennbar, dass auch der erste Endbalken 2 entsprechende Bohrungen für die Leitungen 15, 16 aufweist. Die Bohrungen des ersten Endbalkens 2 weisen vorzugsweise Erweiterungen 201 auf, um eine dichte Verbindung mit jeweils einer der dritten Leitungen ZL zu ermöglichen. Diese Verbindungen sind üblicherweise CT-Verbindungen.

Der zweite Endbalken 3 weist vorzugsweise keine derartigen Bohrungen auf, sondern er dichtet die entsprechenden Enden der Bohrungen der Leitungen 15, 16 des obersten Leitungsmodul-Elements 100. In einigen Ausführungsformen sind hierzu O-Ringe als Dichtungselemente vorhanden. In anderen Ausführungsformen werden hierfür andere bekannte Dichtungselemente verwendet.

Die Bohrungen für die Leitungen 15, 16 in den einzelnen Leitungsmodul-Elementen 100 werden mittels geeigneter Dichtungselemente zueinander abgedichtet. In einigen Ausführungsformen werden hierzu O-Ringe und Stützringe verwendet, die in die Leitungen 15, 16 umgebende Nuten eingelegt werden. Die Nuten sind in Figur 3 gut erkennbar. Auf der gegenüberliegenden Seite jedes Leitungsmodul-Elements 100, und somit auf der dem benachbarten Leitungsmodul-Elements 100 zugewandten Seite, ist eine entsprechende Spiegelfläche vorhanden. Alternativ lassen sich auch andere Dichtelemente mit und ohne O-Ringe verwenden.

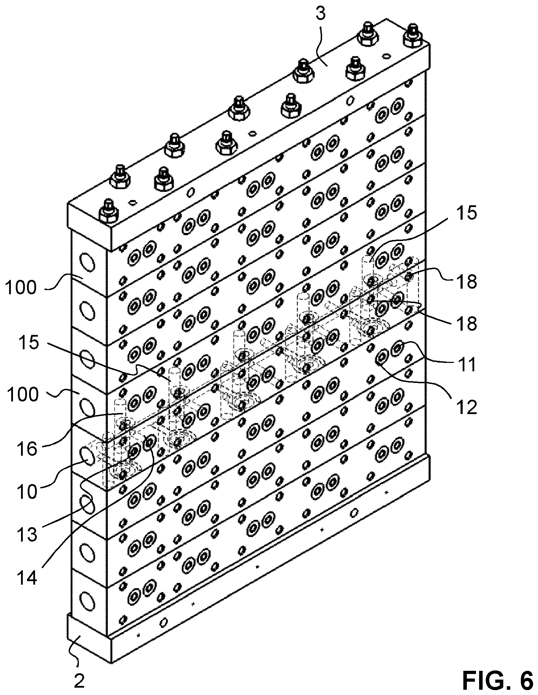

In Richtung senkrecht zur Längsrichtung der Leitungsmodul-Elemente 100 und senkrecht zu den Bohrungen für die Leitungen 15, 16 sind weitere Bohrungen in den Leitungsmodul-Elementen 100 vorhanden. Sie sind paarweise angeordnet, wobei sie entsprechend den Ein- und Ausgangsöffnungen der Ventileinheiten 6, 7 angeordnet sind. In den Figuren 4 bis 8 sind sie mit den Bezugszeichen 11, 12, 13 und 14 versehen und sie werden hier als Ventil-Leitungen bezeichnet. In den Figuren 6 bis 8 ist aus Gründen der besseren Übersicht lediglich ein Teil des Innenbereichs des Leitungsmoduls 1 dargestellt. Dieser Teil erstreckt sich in identischer Weise über den restlichen Bereich der Leitungsmodul-Elemente 100.

Die ersten Ventil-Leitungen 11 erstrecken sich von der äusseren Oberfläche der Leitungsmodul-Elemente 100 zu einer der Speicherbehälter-Leitungen 10. Dies ist in den Figuren 6 bis 8 gut erkennbar. Sie münden in die Speicherbehälter-Leitungen 10. Die zweiten Ventil-Leitungen 12 erstrecken sich benachbart dazu ebenfalls von der äusseren Oberfläche der Leitungsmodul-Elemente 100 zu einer der Zapfsäulen-Leitungen 15. Sie münden in die Zapfsäulen-Leitungen 15.

Die dritten Ventil-Leitungen 13 sind das Pendant zu den zweiten Ventil-Leitungen 12. Sie erstrecken sich von der äusseren Oberfläche der Leitungsmodul-Elemente 100 zur Kryopumpen-Leitung 16 und sie münden in die Kryopumpen-Leitung 16. Die vierten Ventil-Leitungen 14 sind das Pendant zu den ersten Ventil-Leitungen 11. Sie erstrecken sich von der äusseren Oberfläche der Leitungsmodul-Elemente 100 zu einer der Speicherbehälter-Leitungen 10 und münden in diese.

Die ersten Ventil-Leitungen 11 sind mit je einem Einlass 63 einer der ersten Ventileinheiten 6 dicht verbunden. Die benachbart dazu angeordneten zweiten Ventil-Leitungen 12 sind mit einem Auslass 64 der entsprechenden ersten Ventileinheit 6 verbunden. Dadurch kann der Wasserstoff bei einer offenen ersten Ventileinheit 6 vom entsprechenden Speicherbehälter B1-B8 zur entsprechenden Zapfsäule Z1-Z4 fliessen. Dank eines Rückschlagventils 62, das in der ersten Ventileinheit 6 angeordnet ist, ist ein Rückfluss verhindert.

Die dritten Ventil-Leitungen 13 sind mit je einem Einlass einer der zweiten Ventileinheiten 7 dicht verbunden. Die benachbart dazu angeordneten vierten Ventil-Leitungen 14 sind mit einem Auslass der entsprechenden zweiten Ventileinheit 7 verbunden. Dadurch kann der Wasserstoff bei einer offenen zweiten Ventileinheit 7 von der Kryopumpenstation CP in den entsprechenden Speicherbehälter B1-B8 fliessen. Dank eines Rückschlagventils, das in der zweiten Ventileinheit 7 angeordnet ist, ist ein Rückfluss verhindert.

Vorzugsweise ist das Leitungsmodul 1 mit einem gleichmässigen Raster an Bohrungen, die als Ventil-Leitungen verwendet werden, versehen. D.h. die dritten Ventil-Leitungen 13 sind identisch ausgebildet wie die zweiten Ventil-Leitungen 12 und die vierten Ventil-Leitungen 14 sind identisch ausgebildet wie die ersten Ventil-Leitungen 11. Dies erleichtert die Herstellung.

Die ersten und zweiten Ventileinheiten 6, 7 können unterschiedlich ausgebildet sein. Sind sie jedoch wie im dargestellten Beispiel identisch ausgebildet, genügt eine umgekehrte Anordnung der zweiten Ventileinheiten 7, um die Ein- und Auslässe zu tauschen. Dies ist in den Figuren 2 und 3 gut erkennbar.

Wie bereits erwähnt, werden die ersten und zweiten Ventileinheiten 6, 7 auf das Leitungsmodul aufgeschraubt. Die Dichtung ist durch O-Ringe oder andere geeignete Dichtungselemente gewährleistet, die vorzugsweise in Nuten um die Ventil-Leitungen 11, 12, 13, 14 angeordnet sind. Die O-Ringe sind nicht dargestellt. Die Nuten sind in Figur 7 erkennbar.

Die ersten und zweiten Ventileinheiten 6, 7 lassen sich unterschiedlich ausbilden. Vorzugsweise weisen sie ein vorgesteuertes Schaltventil und ein Rückschlagventil auf. Vorzugsweise umfasst jede der Ventileinheiten ein Hauptventil 60, ein Vorsteuerventil 61 und ein Rückschlagventil 62. Das Vorsteuerventil 61 wird auch Steuerventil oder Pilotventil genannt. Es ist üblicherweise ein Magnetventil. Es steuert das eigenmedium-vorgesteuerte Hauptventil 60.

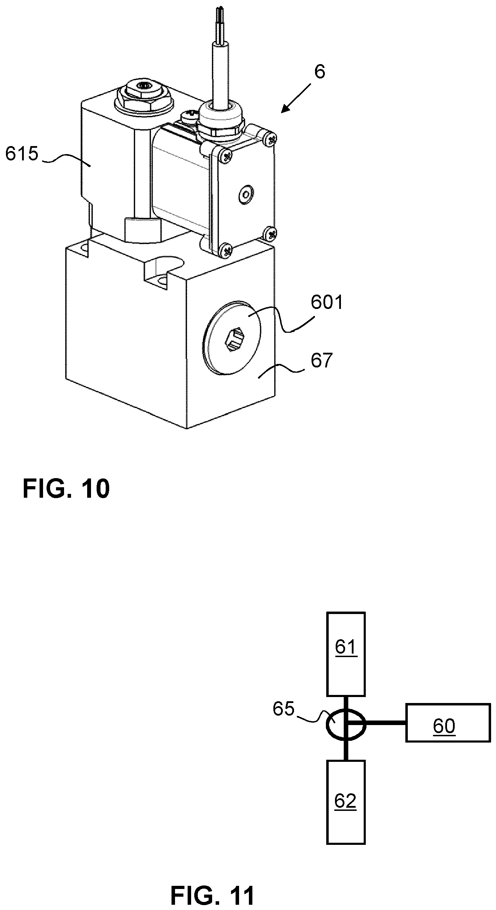

In den Figuren 10 bis 12 ist eine bevorzugte Ausführungsform einer ersten Ventileinheit 6 dargestellt. Vorzugsweise sind die zweiten Ventileinheiten 7 identisch ausgebildet.

Ein Merkmal dieser Ventileinheit 6 ist, dass Hauptventil 60, Pilotventil 61 und Rückschlagventil 62 über eine gemeinsame Ventilkammer 65 in Fluidkommunikation stehen. Dies ist schematisch in Figur 11 dargestellt. Hierzu öffnet sich ein Ausgang des Hauptventils 60, ein Ausgang des Vorsteuerventils 61 sowie ein Eingang des Rückschlagventils 62 zur gemeinsamen Ventilkammer 65 hin.

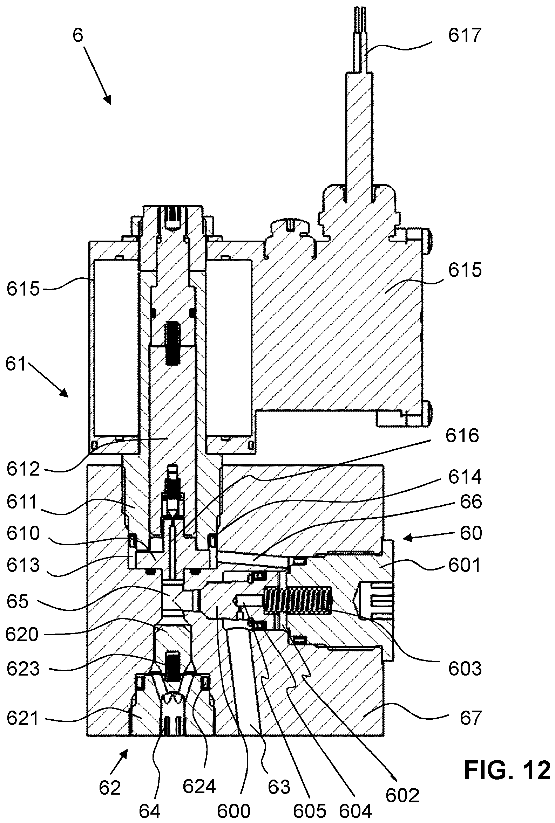

In Figur 12 ist die Ventileinheit 6 konkreter dargestellt. Das Hauptventil 60 ist gemeinsam mit dem Rückschlagventil 62 in einem Ventilgehäuse 67 angeordnet. Das Vorsteuerventil 61 ragt mit seiner Ankerführung 611, seinem Anker 612 und seiner ortsfest angeordneten Düse 610 in das Ventilgehäuse 67 hinein. Eine statische Dichtung der Düse 610 gegenüber dem Ventilgehäuse 67 ist mit dem Bezugszeichen 614 versehen. Ein das Ventilgehäuse 67 überragendes Magnetspulengehäuse 615 weist eine Magnetspule zu Betätigung des Ankers 612 auf. Ein elektrischer Anschluss 617 erstellt die Verbindung zu einer Steuerung.

Eine ringförmige Druckkammer 613 umgibt die Düse 610 des Vorsteuerventils 61. Eine Steuerleitung 66 führt von der Druckkammer 613 zum Steuerraum 602 des Hauptventils 60.

Das Hauptventil 60 weist einen bewegbaren Kolben 600 auf, der über eine Feder 603 mit einem Deckel 601 verbunden ist. Eine Bohrung 605 verbindet einen verjüngten Fortsatz des Einlasses 63 mit dem Steuerraum 602. Der Deckel 601 ist am Ventilgehäuse 67 fixiert gehalten. Der bewegbare Kolben 600 ist mit einer dynamischen Dichtung 604 versehen.

Der Einlass 63 führt von einer Seite des quaderförmigen Ventilgehäuses 67 zum bewegbaren Kolben 600 des Hauptventils 60 und bei offener Stellung des Kolbens 600 zur Ventilkammer 65. In diesem Beispiel ist der Kolben 600 dabei umströmt. Der Kolben 600 weist hierfür an seinem Umfang entsprechende Ausnehmungen bzw. Rippen auf, die in der Figur 12 nicht erkennbar sind. In alternativen Ausführungsformen weist der Kolben 600 hierfür Durchführungsöffnungen auf.

Das Rückschlagventil 62 ist auf derselben Seite des Ventilkörpers 67 angeordnet wie der Einlass 63. Es befindet sich im Auslass 64. Der bewegbare Kolben 620 des Rückschlagventils 62 ist zur Ventilkammer 65 hin gerichtet. Nach aussen ist ein Ventilkörper 621 angeordnet. Er weist eine statische Dichtung 624 auf. Zwischen Kolben 620 und Ventilkörper 621 ist eine Feder 623 vorhanden. Ein rückströmendes Fluid durchströmt oder umströmt den Ventilkörper 621 und schliesst den Kolben 620 des Rückschlagventils 62. Im aktuellen Ausführungsbeispiel ist der Kolben 620 umströmt. Die entsprechenden Ausnehmungen bzw. Rippen sind in der Figur 12 nicht erkennbar.

Ein über das Hauptventil 60 in die Ventilkammer 65 fliessendes Fluid strömt durch das Rückschlagventil 62 nach aussen. Der Fluidweg vom Einlass 63 zum Auslass 64 ist somit u-förmig.

Das Hauptventil 60 ist mittels des Vorsteuerventils 61 eigenmedium-vorgesteuert. Bei geschlossenem Hauptventil 60 und geschlossenem Vorsteuerventil 61 ist die Verbindung zwischen dem Einlass 63, der Bohrung 605 und dem Steuerraum 602 offen. Wird das Vorsteuerventil 61 mittels der Magnetspule geöffnet, so wird der Anker 612 nach oben gezogen und der zentrale Kanal 616 in der Düse 610 erstellt eine Verbindung von der Ventilkammer 65, der Druckkammer 613 des Vorsteuerventils 61, der Steuerleitung 66 zum Steuerraum 602 des Hauptventils 60. Bei offenem Rückschlagventil 62 ist zudem die Verbindung von der Ventilkammer 65 zum Auslass 64 offen. Das Öffnen des Vorsteuerventils 61 ergibt somit einen Druckabfall im Steuerraum 602 im Vergleich zum Druck in der Bohrung 605, wodurch das Hauptventil 60 geöffnet wird.

Beim Schliessen des Vorsteuerventils 61 wird die Verbindung zwischen Ventilkammer 65 und Steuerraum 602 unterbrochen. Der Druck in der Bohrung 605 und im Steuerraum 602 ist derselbe, der Druck in der Ventilkammer 65 ist aufgrund des offenen Rückschlagventils 62 kleiner. Der Kolben 600 schliesst dank der Feder 603, d.h. der Kolben 600 bewegt sich in der Figur 12 nach links.

Es lassen sich jedoch auch andere Hauptventile, Vorsteuerventile und Rückschlagventile in der erfindungsgemässen u-förmigen Anordnung verwenden. Das hier dargestellte Beispiel ist lediglich eine Variante, deren Ventile teilweise oder alle gemeinsam durch bekannte Ventile ersetzt sein können.

Die Oberfläche des Ventilgehäuses 67 ist im Bereich des Einlasses 63 und des Auslasses 64 vorzugsweise plan ausgebildet. Dies erleichtert die Montage auf dem Leitungsmodul 1.

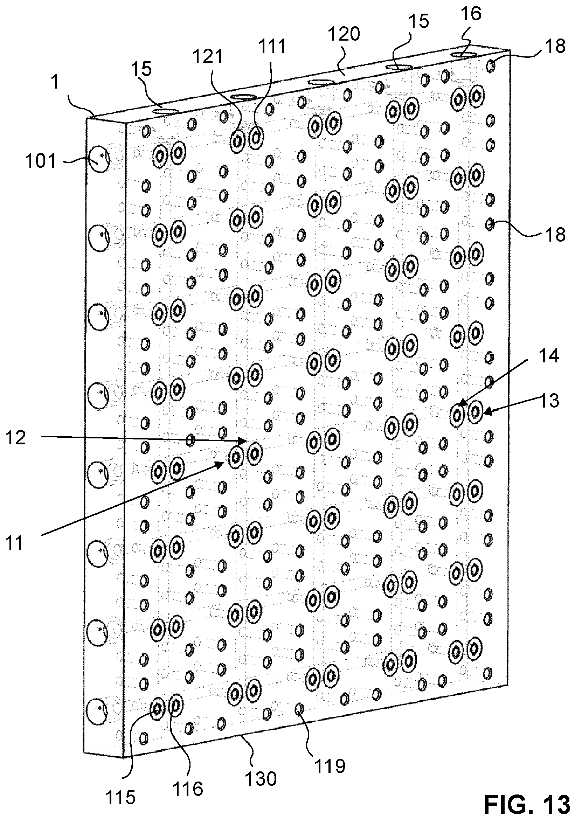

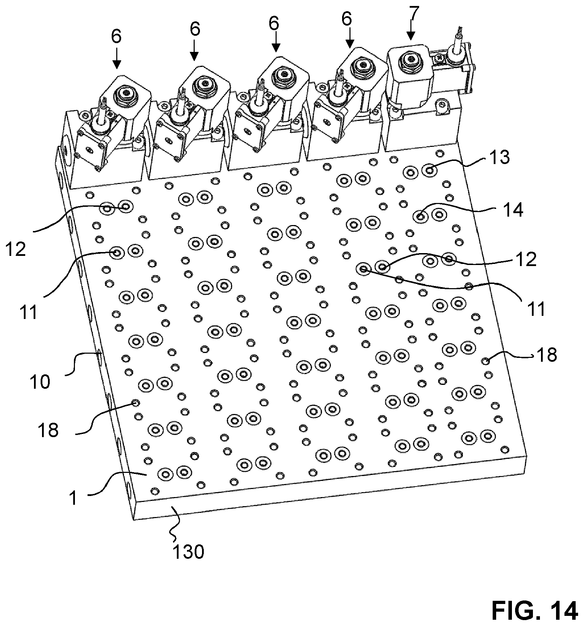

In den Figuren 13 und 14 ist eine zweite Ausführungsform des erfindungsgemässen Leitungsmoduls 1 dargestellt. Es lässt sich mit denselben ersten und zweiten Ventileinheiten 6, 7 verwenden wie das erste Ausführungsbeispiel. Die Bohrungen und Leitungen sind ebenfalls dieselben. Es gilt somit das oben Gesagte. Der Unterschied zum ersten Ausführungsbeispiel besteht darin, dass das Leitungsmodul 1 aus einem einzigen massiven Bauteil besteht. Es ist eine dicke Platte, insbesondere aus Metall, beispielsweise Stahl, die mit Bohrungen versehen ist, um die oben beschriebenen Leitungen und Fixierungsmöglichkeiten für die Ventileinheiten 6, 7 zu schaffen. Die zwei Endbalken 2, 3 sind nicht notwendig.

Wie in Figur 13 zu erkennen ist, durchdringen die Zapfsäulen-Leitungen 15 und die Kryopumpen-Leitung 16 die obere Stirnfläche 120 des Leitungsmoduls 1. Die gegenüberliegende untere Stirnfläche 130 ist geschlossen ausgebildet, wie in Figur 14 erkennbar ist. Dies ist lediglich beispielhaft zu verstehen. Dieses Leitungsmodul 1 kann, wie auch das Leitungsmodul gemäss der ersten Ausführungsform, in jeglicher Raumposition verwendet werden.

In Figur 14 sind einige Ventileinheiten 6, 7 in ihrer montierten Position dargestellt. Auch in dieser Ausführungsform lässt sich das Leitungsmodul 1 vollständig bestücken, wie dies in Figur 2 für das erste Ausführungsbeispiel gezeigt ist.

Der erfindungsgemässe Verteiler ermöglicht eine kompakte und platzsparende Anordnung von Ventileinheiten, die zudem auf einfache Art und Weise ausgewechselt werden können. Vorzugsweise umfasst jede Ventileinheit ein Hauptventil, ein Vorsteuerventil und ein Rückschlagventil.

**BEZUGSZEICHENLISTE**

| | | | |
|---|---|---|---|
| 1 | Leitungsmodul | 602 | Steuerraum |
| 10 | Speicherbehälter-Leitung | 603 | Feder |
| 101 | Erweiterung | 604 | dynamische Dichtung |
| 11 | erste Ventil-Leitung | 605 | Bohrung |
| 12 | zweite Ventil-Leitung | 61 | Vorsteuerventil |
| 13 | dritte Ventil-Leitung | 610 | Anker |
| 14 | vierte Ventil-Leitung | 611 | Ankerführung |
| 15 | Zapfsäulen-Leitung | 612 | Anker |
| 16 | Kryopumpen-Leitung | 613 | Druckkammer |
| 17 | Durchgangsbohrung | 614 | statische Dichtung |
| 18 | Gewindelöcher | 615 | Magnetspulengehäuse |
| 100 | Leitungsmodul-Element | 616 | zentraler Kanal |
| 120 | erste Stirnfläche | 617 | elektrischer Anschluss |
| 130 | zweite Stirnfläche | 62 | Rückschlagventil |
| | | 620 | Kolben |
| 2 | erster Endbalken | 621 | Ventilkörper |
| 20 | Befestigungslöcher | 623 | Feder |
| 21 | Gewindeöffnung | 624 | statische Dichtung |
| 201 | Erweiterung | 63 64 | Einlass Auslass |
| 3 | zweiter Endbalken | 65 | Ventilkammer |
| 30 | Befestigungslöcher | 66 | Steuerleitung |
| 31 | Durchgangsbohrung | 67 | Ventilgehäuse |
| | | 68 | Schraube |
| 4 | Verbindungsschrauben | | |
| 40 | Mutter | 7 | Ventileinheit der Kryopumpenstation |
| 5 | Öse | | |
| | | B1 | erster Speicherbehälter |
| 6 | Ventileinheit der | B2 | zweiter Speicherbehälter |
| | Verbraucherstation | B3 | dritter Speicherbehälter |
| 60 | Hauptventil | B4 | vierter Speicherbehälter |
| 600 | Kolben | B5 | fünfter Speicherbehälter |
| 601 | Deckel | B6 | sechster Speicherbehälter |
| B7 | siebter Speicherbehälter | | Verbraucherstation |
| B8 | achter Speicherbehälter | Z2 | zweite Zapfsäule / zweite |
| BL | erste Leitung | | Verbraucherstation |
| CP | Kryopumpenstation | Z3 | dritte Zapfsäule / dritte |
| CL | zweite Leitung | | Verbraucherstation |
| T | Tanklastwagen | Z4 | vierte Zapfsäule / vierte |
| V | Verteiler | | Verbraucherstation |
| Z1 | erste Zapfsäule / erste | ZL | dritte Leitung |

## Patentansprüche

1. Verteiler eines Fluidversorgungssystems, insbesondere einer WasserstoffTankstelle,
mit Leitungen (10-16) zur Verbindung von Speicherbehältern (B1-B8) mit Stationen (CP, Z1-Z4),
mit Ventileinheiten (6, 7), um wahlweise die Verbindung zwischen den Speicherbehältern (B1-B8) und den Stationen (CP, Z1-Z4) zu öffnen und zu schliessen,
**dadurch gekennzeichnet,**
**dass** die Leitungen (10-16) in einem Leitungsmodul (1) matrixförmig angeordnet sind und
**dass** die Ventileinheiten (6,7) matrixförmig auf dem Leitungsmodul (1) lösbar befestigt sind.

2. Verteiler nach Anspruch 1, wobei das Leitungsmodul (1) aus mindestens einem massiven Bauteil besteht und wobei die Leitungen (10-16) Bohrungen in dem mindestens einen massiven Bauteil sind.

3. Verteiler nach Anspruch 2, wobei das Leitungsmodul (1) aus einem einzigen massiven Bauteil besteht.

4. Verteiler nach Anspruch 2, wobei das Leitungsmodul (1) mehrere quaderförmige, längliche Bauteile (100) aufweist, wobei jedes Bauteil die Verbindung zu einem Speicherbehälter (B1-B8) oder einer Station (CP, Z1-Z4) erstellt und wobei mehrere derartige Bauteile aneinanderfügbar sind, um gemeinsame Leitungen (10-16) auszubilden.

5. Verteiler nach einem der Ansprüche 1 bis 4, wobei jede Ventileinheit (6, 7) ein Hauptventil (60), ein Vorsteuerventil (61) zur Steuerung des Hauptventils (60) und ein Rückschlagventil (62) aufweist, die ein gemeinsames Modul bilden, das als Einheit am Leitungsmodul (1) befestigbar und vom Leitungsmodul (1) lösbar ist.

6. Verteiler nach Anspruch 5, wobei ein Durchflussweg des Fluids durch die Ventileinheit (6, 7) von einem Einlass (63) zu einem Auslass (64) der Ventileinheit (6, 7) u-förmig ist.

7. Verteiler nach einem der Ansprüche 5 oder 6, wobei mindestens das Hauptventil (60) und das Rückschlagventil (62) in einem gemeinsamen Ventilgehäuse (67) angeordnet sind.

8. Verteiler nach einem der Ansprüche 5 bis 7, wobei die Ventileinheit (6, 7) eine Ventilkammer (65) aufweist, zu der sich der Ausgang des Hauptventils (60), der Ausgang des Vorsteuerventils (61) und der Eingang des Rückschlagventils (62) öffnet.

9. Verteiler nach einem der Ansprüche 1 bis 8, wobei ein Teil der Leitungen des Leitungsmoduls (1) Speicherbehälter-Leitungen (10) sind, wobei jede Speicherbehälter-Leitung (10) jeweils einen Speicherbehälter (B1-B8) mit einer ersten Teilmenge der Ventileinheiten (6, 7) verbindet und wobei ein anderer Teil der Leitungen des Leitungsmoduls (1) Station-Leitungen (15, 16) sind, wobei jede Station-Leitung (15, 16) eine zweite Teilmenge der Ventileinheiten (6,7) mit jeweils einer Station (CP, Z1-Z4) verbindet.

10. Verteiler nach Anspruch 9, wobei die erste Teilmenge und die zweite Teilmenge nicht identisch sind und wobei genau eine Ventileinheit (6, 7) des Verteilers in der ersten und der zweiten Teilmenge vorhanden ist.

11. Verteiler nach einem der Ansprüche 9 oder 10, wobei sich die Speicherbehälter-Leitungen (10) in einer ersten Richtung einer Matrix erstrecken und die Station-Leitungen (15, 16) sich in einer zur ersten Richtung senkrecht verlaufenden zweiten Richtung der Matrix erstecken, wobei die Speicherbehälter-Leitungen (10) beabstandet zu den Station-Leitungen (15, 16) verlaufen.

12. Verteiler nach einem der Ansprüche 9 bis 11, wobei erste Ventil-Leitungen (11) vorhanden sind, die sich, in einem Winkel zu den Speicherbehälter-Leitungen (10), von den Speicherbehälter-Leitungen (10) zu den Ventileinheiten (6, 7) erstrecken, und wobei zweite Ventil-Leitungen (12) vorhanden sind, die sich, in einem Winkel zu den Station-Leitungen (15, 16), von den Station-Leitungen (15, 16) zu den Ventileinheiten (6, 7) erstrecken.

13. Verteiler nach einem der Ansprüche 9 bis 12, wobei pro Speicherbehälter (B1-B8) genau eine Speicherbehälter-Leitung (10) und pro Station (CP, Z1-Z4) genau eine Station-Leitung (16, 15) vorhanden ist, wobei die Speicherbehälter-Leitung (10) und die Station-Leitung (16, 15) im Leitungsmodul (1) ohne Unterbrechung und geradlinig verlaufen.

14. Verteiler nach einem der Ansprüche 1 bis 13, wobei mindestens eine Station eine Verbraucherstation, insbesondere eine Zapfsäule (Z1-Z4), ist und wobei mindestens eine weitere Station eine Kryopumpenstation (CP) zur Befüllung der Speicherbehälter (B1-B8) ist, wobei die der mindestens einen Verbraucherstation zugeordneten Ventileinheiten (6) sich mindestens in ihrer Anordnung von den der Kryopumpenstation (CP) zugeordneten Ventileinheiten (7) unterscheiden.

15. Ventileinheit, insbesondere zur Verwendung in einem Verteiler gemäss einem der Ansprüche 1 bis 14, wobei sie ein Hauptventil (60), ein Vorsteuerventil (61) zur Steuerung des Hauptventils (60) und ein Rückschlagventil (62) aufweist, wobei sie ein gemeinsames Modul bilden, das als Einheit montierbar und entfernbar ist, wobei das Hauptventil (60), das Vorsteuerventil (61) und das Rückschlagventil (62) derart zueinander angeordnet sind, dass von einem Einlass (63) in die Ventileinheit (6) zu einem Auslass (64) aus der Ventileinheit (6) ein u-förmiger Durchflussweg für einen Durchfluss eines Fluids ausgebildet ist.
